# FASCICULE DE BREVET EUROPEEN

(11) **EP 0 435 768 B1**
(45) Date de publication et mention de la délivrance du brevet: **24.08.1994**
(21) Numéro de dépôt: 90403765.2
(22) Date de dépôt: 26.12.1990
(51) Int. Cl.: G01S 17/06

(54) **Procédé de restitution du mouvement d'un mobile par observation d'un symbole formé sur ce dernier et dispositifs pour la mise en oeuvre du procédé**
Verfahren und Anordnung zur Lagebestimmung eines bewegten Körpers durch Verfolgen einer auf dem Körper angeordneten Markierung
Method and device of attitude measurement of a moving body by tracking a pattern placed on the body

(30) Priorité: 28.12.1989 FR 8917326
(43) Date de publication de la demande: 03.07.1991
(73) Titulaire: AEROSPATIALE Société Nationale Industrielle, 75781 Paris Cédex 16 (FR)
(72) Inventeur: Pieters, Bernard, F-78250 Meulan (FR); Deniau, Patrice, F-78480 Verneuil sur Seine (FR); Merle, Jean-Pierre, F-91400 Orsay (FR); Devos, Francis, F-91405 Orsay Cedex (FR); Coquelet, Christophe, F-94240 l'Hay les Roses (FR); Garda, Patrick, F-94320 Thiais (FR)
(74) Mandataire: Dubois-Chabert, Guy

(56) Documents cités:
- EP-A- 0 122 503
- EP-A- 0 211 702
- EP-A- 0 330 100
- GB-A- 2 018 422
- US-A- 4 672 562
- US-A- 4 744 664
- US-A- 4 825 393

## Description

La présente invention a pour objet un procédé de restitution du mouvement d'un mobile par observation d'un symbole formé sur ce dernier et des dispositifs pour la mise en oeuvre du procédé. Elle s'applique notamment à l'observation en temps réel de largage de propulseur, de booster ou autre à partir d'un lanceur en vol, mais aussi en robotique à la détermination de la trajectoire d'un objet.

La restitution, en temps réel, du mouvement relatif de sous-ensembles constitutifs d'un lanceur au cours de leur largage autorise le contrôle du bon déroulement des opérations. La connaissance des marges de déboîtement et des perturbations cinématiques communiquées au corps largué conditionne la mission, les performances et la qualification des systèmes lanceurs. Il s'agit donc de déterminer à l'aide d'un équipement embarqué la trajectoire et l'attitude du corps largué.

En robotique, on veut contrôler le déplacement d'un objet mobile dans un environnement complexe pour permettre d'éventuelles corrections de trajectoire.

Les dispositifs existants tels l'observation par caméra cinématographique, les mesures directes par fil, ou l'observation par caméra vidéo présentent chacun un grand nombre d'inconvénients : imprécisions et mauvaise fiabilité des mesures, encombrement, nécessité de récupérer la caméra cinématographique après un largage, difficulté du traitement des informations délivrées.

Un dispositif utilisant la rétroréflexion d'un réseau optique et permettant de déterminer les angles relatifs de tangage, lacet et roulis entre deux objets est aussi connu du document EP-A- 0 122 503.

La présente invention pallie ces inconvénients. Elle a pour but de permettre la détermination du mouvement d'un objet par rapport à un autre de façon simple et ne nécessitant qu'une faible quantité d'informations à transmettre du détecteur permettant l'observation de l'objet au moyen de traitement de ces informations.

Dans le cas d'un largage, la présente invention dispense de toute récupération des corps largués mais aussi du corps principal : la transmission des informations est effectuée au fur et à mesure de leur enregistrement.

De façon plus précise, l'invention concerne un procédé de restitution du mouvement d'un mobile par rapport à un repère de référence lié à un objet de référence, caractérisé en ce que, un symbole étant formé sur le mobile, ce symbole étant à contour rectiligne présentant au moins deux droites parallèles, il consiste à :
- périodiquement, acquérir une image dudit symbole à l'aide d'une caméra solidaire de l'objet de référence,
- à chaque acquisition :
   - projeter l'image acquise sur au moins deux axes X et Y formant un repère de projection de position et d'orientation connues par rapport au repère de référence,
   - déterminer les maxima de chacune des projections,
- au moins entre chaque acquisition, maintenir un mouvement connu de rotation relatif entre le symbole et le repère de projection,
- d'une succession de maxima de projections, déduire l'orientation et la position du symbole par rapport au repère de référence,
- d'une succession d'orientations et de positions du symbole, restituer le mouvement du mobile par rapport au repère de référence.

De plus, l'invention concerne un dispositif pour la mise en oeuvre de ce procédé. Un tel dispositif comprend :
- un moyen pour former un symbole plan à contour rectiligne présentant au moins deux droites parallèles sur le mobile dont le mouvement est à déterminer par rapport à un repère de référence lié à un objet de référence,
- une caméra électronique disposée sur un objet de référence, cette caméra comportant au moins :
   - un détecteur fournissant un signal représentatif d'une image enregistrée dudit symbole,
   - un moyen pour effectuer une projection P(X) sur l'axe X selon l'axe Y et une projection P(Y) sur l'axe Y selon l'axe X de l'image, ce moyen fournissant un signal représentatif des projections P(X) et P(Y),
   - un moyen pour mettre en rotation relative le symbole et le repère de projection,
- des moyens de traitement reliés à la caméra électronique et aptes à déduire à partir du signal représentatif des maxima des projections P(X) et P(Y) l'orientation et la position du mobile à chaque instant.

Dans un mode préféré de réalisation de ce dispositif, le détecteur de la caméra est du type rétine intégrée à réseau de processeurs. Cette rétine comprend des cellules photosensibles arrangées en matrice. Pour effectuer les projections, des cellules d'accumulation connectées aux lignes et aux colonnes extrêmes de la matrice recueillent les informations inscrites dans chaque cellule photosensible de la rétine.

Le détecteur de la caméra peut être aussi constitué par un réseau de cellules à transfert de charges arrangées en lignes et en colonnes.

Les deux types de détecteurs précités appartiennent à la catégorie des détecteurs à tableau de photodétecteurs ("photodetectors array" en terminologie anglosaxonne). En fait, tous les détecteurs de cette catégorie peuvent être utilisés dans un dispositif conforme à l'invention.

Dans un autre mode de réalisation du dispositif, le détecteur de la caméra est du type vidicon.

De manière avantageuse, on fait subir un nettoyage à l'image avant d'effectuer les projections. Ce nettoyage a pour but d'isoler le symbole du fond de l'image.

Les caractéristiques et avantages de l'invention apparaîtront mieux après la description qui suit donnée à titre explicatif et nullement limitatif. Cette description se réfère à des dessins annexés sur lesquels :
- la figure 1 représente schématiquement l'aspect d'un symbole et ses projections selon deux directions de l'espace,
- les figures 2A à 2C représentent schématiquement trois suites de projections successives dans trois cas d'orientation et de position du symbole,
- la figure 3 représente un organigramme concernant le procédé selon l'invention,
- la figure 4 représente schématiquement une configuration d'un symbole par rapport au plan (XR, YR) de référence,
- la figure 5 représente schématiquement une courbe d'évolution de maxima de projection sur l'axe X en fonction du temps pour la configuration de la figure 4,
- la figure 6 représente schématiquement une vue générale d'un dispositif conforme à l'invention,
- la figure 7 représente schématiquement une vue générale d'une variante de réalisation d'un dispositif conforme à l'invention,
- la figure 8 représente schématiquement un premier mode de réalisation d'un détecteur, des moyens de nettoyage et de projection conformément à l'invention,
- la figure 9 représente schématiquement une vue partielle du dispositif de la figure 8,
- la figure 10 représente schématiquement un autre mode de réalisation d'un détecteur, des moyens de nettoyage et de projection conformément à l'invention.

Le procédé conforme à l'invention permet la détermination de l'orientation et de la position d'un mobile par rapport à un repère de référence attaché à un objet de référence. La connaissance des orientations et positions successives permet de reconstituer le mouvement.

Le procédé peut se diviser en trois étapes principales :
Etape principale 1 - acquisition, grâce à une caméra électronique solidaire de l'objet de référence, de prises de vue successives, à une cadence déterminée.

Conformément au procédé, un symbole est formé sur le mobile qui se trouve dans le champ d'observation de la caméra à une position et une orientation connues à l'instant initial.

Le symbole est plan et composé par exemple de quatre barres parallèles deux à deux et croisées de manière à représenter sensiblement un dièse. Les dimensions des barres sont choisies non identiques entre elles de manière à disymétriser le symbole.
Etape principale 2 - on projette l'image acquise sur deux axes X et Y, une projection P(X) étant effectuée sur l'axe X et selon l'axe Y, une projection P(Y) étant effectuée sur l'axe Y et selon l'axe X. Les axes X et Y forment un repère de projection de position et d'orientation connues par rapport au repère de référence (XR, YR, ZR) lié à l'objet de référence. Au moins entre chaque acquisition, le symbole et le repère de projection sont dotés d'un mouvement connu de rotation relatif ayant une vitesse pouvant aller de un dizième à une dizaine de tours par seconde.

De manière avantageuse, à chaque acquisition, avant d'effectuer les projections, l'image acquise subit un nettoyage. On doit comprendre par ce terme, tout type de traitement d'image permettant d'isoler le symbole, qui est l'élément utile de l'image pour la restitution du mouvement, du fond qui est considéré comme le bruit de la mesure.

A titre d'exemples de nettoyage, on peut citer le seuillage, le masquage ou la détection de contours.

Lors d'un seuillage, les valeurs des différents pixels formant l'image acquise sont comparées à un seuil déterminé, et en fonction de cette comparaison, sont mises à l'une des valeurs "0" (par exemple si la valeur du pixel considéré est inférieure au seuil) ou à "1" (si la valeur du pixel considéré est supérieure au seuil).

On obtient ainsi une image acquise très contrastée ne présentant pas de niveau de gris intermédiaire.

Lors d'un masquage, seule une partie de l'image acquise est prise en compte dans le traitement ultérieur. La partie à prendre en compte est déduite des images précédentes : on se limite à la partie de l'image contenant le symbole.

Une détection de contours permet de restituer l'image du symbole épurée de tout fond continu dans le cas d'un symbole présentant des barres fines. Dans le cas d'un symbole présentant des barres épaisses, on utilise pour le même résultat des techniques d'érosion, de dilatation ou de squelettisation.

La combinaison de ces techniques de traitement d'image permet d'améliorer l'efficacité du nettoyage.
Etape principale 3 - grâce à ces projections P(X) et P(Y), à la connaissance du mouvement relatif de rotation imposée entre le symbole et le repère de projection, et à la connaissance d'une position et une orientation initiale, on détermine l'orientation et la position du mobile à chaque instant.

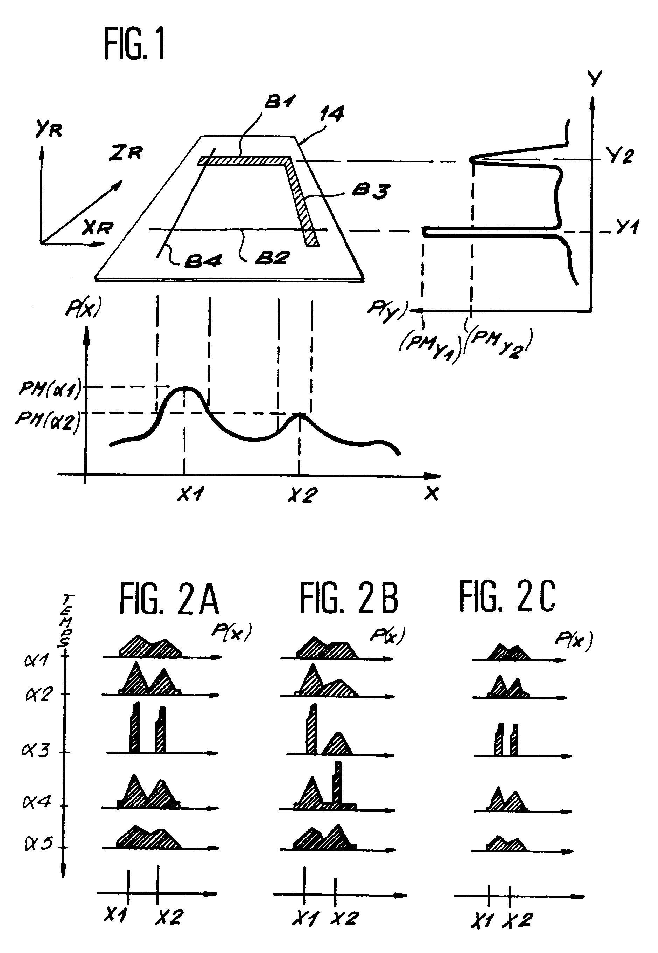

La figure 1 représente schématiquement l'image d'un symbole acquise dans le plan du détecteur de la caméra et ses projections selon les deux directions X et Y de l'espace. Dans cet exemple, le symbole a subi un basculement vers l'avant (c'est-à-dire vers les ZR positifs) par rapport au plan de référence (XR, YR) contenant le repère de projection (plan du détecteur par exemple).

Dans cet exemple, le symbole est constitué de deux premières barres parallèles B1 et B2, croisées perpendiculairement à deux autres barres parallèles B3, B4 de manière à former sensiblement un dièse dissymétrique. En effet, les barres B1 et B3 sont plus larges et moins longues que les barres B2 et B4.

On considère dans cet exemple, que l'image a subi un seuillage : les pixels où sont enregistrées les barres du symbole valent "1", les autres "0".

Les projections P(X) et P(Y) correspondent au nombre de pixels du détecteur de la caméra valant "1" selon les directions Y et X respectivement.

Les calculs des projections intervenant à chaque acquisition sont considérés comme instantanés car ils sont de durée négligeable devant la durée d'une acquisition.

La projection P(X) sur l'axe X et selon Y possède deux "bosses" correspondant aux barres B3 et B4 qui présentent un angle apparent avec l'axe X dû au basculement du symbole. Dans cette projection, les barres B1 et B2 parallèles à l'axe X, ne donnent qu'un fond quasi uniforme.

La projection P(Y) sur l'axe Y selon l'axe X présente deux pics d'amplitude maximum reposant sur un fond quasi continu. Les pics correspondent aux projections des barres B1 et B2 qui restent perpendiculaires à l'axe Y lors du basculement du symbole. Le fond continu est dû à la projection des barres B3 et B4.

On détermine pour chaque enregistrement les abscisses X1, X2,..., Y1, Y2,... et les valeurs PM(X1), PM(X2),..., PM(Y1), PM(Y2),... des maxima des projections P(X) et P(Y).

Sur l'exemple représenté, chaque courbe P(X) et P(Y) ne présente que deux maxima; mais d'autres maxima peuvent apparaître dus au bruit de mesure.

Dans la suite du procédé, ces maxima ne correspondant pas à une mesure effective sont éliminés : comme on le verra plus loin, on utilise le fait qu'étant dus à un bruit, ils ne sont pas corrélés entre eux au cours du temps alors que les maxima dus aux barres du symbole le sont.

Lors de la rotation imposée entre le symbole et le repère de projection qui se superpose à tout autre mouvement relatif entre le mobile et l'objet de référence, les projections P(X) ou P(Y) se rassemblent en un pic lorsqu'une barre est parallèle à l'une des directions de projection Y ou X respectivement, le mouvement de rotation étant de vitesse très supérieure à la vitesse du mobile.

Les figures 2A, 2B, 2C représentent schématiquement des séquences de projection P(X) au cours du temps et pour trois cas d'orientation et de position du symbole.

Les instants successifs des enregistrements correspondent à une suite d'angles connus 1, 2, 3 ... repérant la rotation relative entre le symbole et le repère de projection. Ces angles sont ramenés, par projection, à des angles repérant la rotation par rapport au repère de référence.

La figure 2A correspond au cas où le plan du symbole est parallèle au plan contenant le repère de projection.

Deux pics d'amplitude maximum apparaissent simultanément à chaque quart de tour du symbole par rapport au repère de projection.

Ces pics correspondent au fait que deux barres sont perpendiculaires à l'axe X. Avantageusement, les barres du symbole ne sont pas identiques. Ainsi, on peut identifier à quelles barres sont dus les pics, en analysant par exemple le rapport entre leur amplitude et leur largeur à mi-hauteur.

La figure 2B correspond au cas où le plan du symbole a subi un basculement autour d'un axe parallèle à l'axe X.

Les pics d'amplitude maximum apparaissent à des instants différents (i.e. pour des angles différents). En effet, le basculement introduit une perspective et les barres perpendiculaires à l'axe X présentent un angle apparent avec ce dernier.

La figure 2C correspond au cas où le plan du symbole est parallèle au plan contenant un repère de projection mais plus éloigné de ce dernier que sur la figure 2A.

Les pics d'amplitude maximum apparaissent donc à nouveau simultanément, et pour le même angle que dans le cas 2A mais leur amplitude est inférieure et la valeur des abscisses différente.

On comprend, au vu des figures précédentes, que l'orientation et la position du symbole peuvent être déterminées par la connaissance du mouvement de rotation relatif entre le symbole et le repère de projection et la connaissance des lois de la perspective : tout basculement ou inclinaison du symbole se traduit par un décalage dans l'apparition des maxima de projection sur les X et Y, et la position se déduit de la position des abscisses des maxima de projection sur les axes X et Y et de l'amplitude de ces maxima.

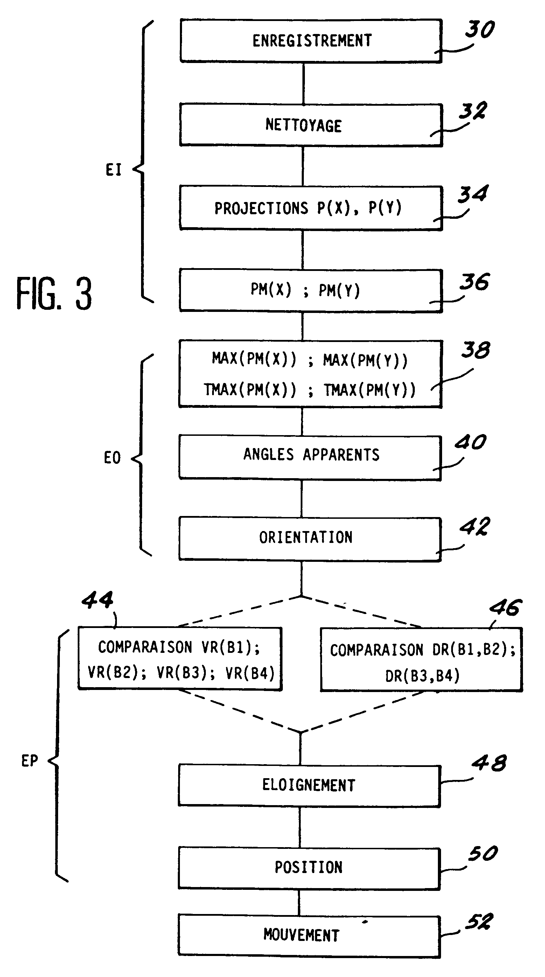

En référence à la figure 3, on décrit de manière plus détaillée les étapes permettant la restitution du mouvement du mobile.

Dans le procédé, on distingue trois échelles de temps. Les étapes correspondant à une première échelle de temps sont regroupées sous la référence globale EI. EI se répète à la cadence de prise de vue; celle-ci est adaptée à la vitesse de rotation relative entre le symbole et le repère de projection, par exemple 1 Hz pour une vitesse de 1 t/s.

EI comprend les étapes suivantes :
- étape 30 :: acquisition d'une image ;
- étape 32 :: nettoyage de cette image ;
- étape 34 :: projection de cette image sur deux axes X et Y.
- étape 36 :: détermination des maxima PM(X), PM(Y) de chacune des courbes P(X), P(Y).

Les étapes suivantes correspondent à une deuxième échelle de temps. Elles sont effectuées après avoir acquis une succession d'images permettant l'apparition d'au moins un pic de projection correspondant à chaque barre du symbole.

La référence globale E0 regroupe les étapes pour la détermination de l'orientation du symbole, EP les étapes pour la détermination de sa position.

Pour déterminer l'orientation du symbole, on effectue les étapes suivantes :
- étape 38 :: par comparaison entre les maxima successifs de chaque projection, on détermine les valeurs maximales de ces maxima PM(X), PM(Y) et les instants TMAX(PM(X)), TMAX(PM(Y)) auxquels elles apparaissent.

Au cours du temps, on peut tracer la courbe d'évolution de ces maxima PM(X) et PM(Y).

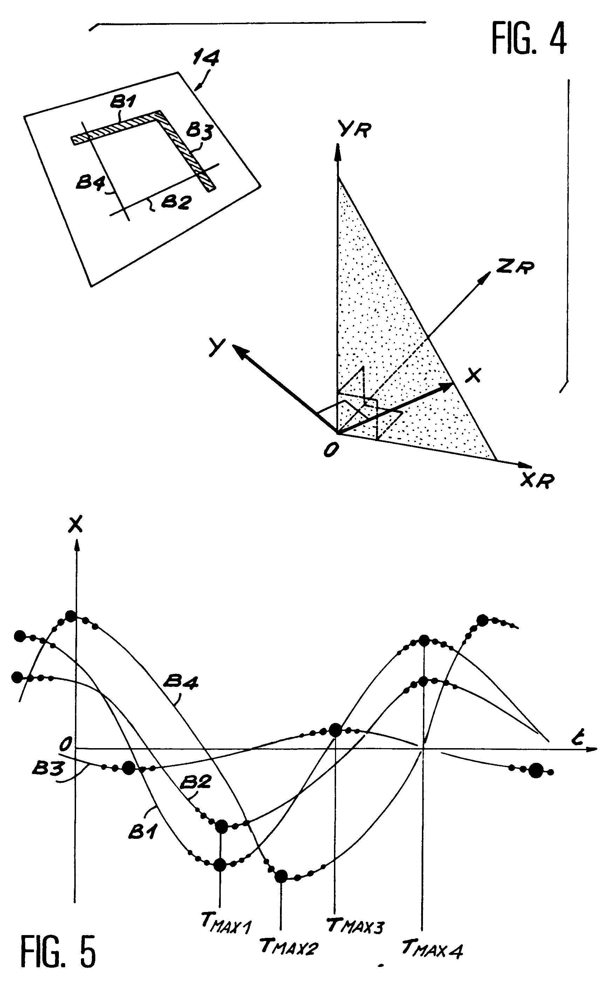

La figure 4 représente schématiquement une configuration d'un symbole vu par rapport au plan (XR, YR) de référence.

Dans cet exemple, le repère de projection est en rotation par rapport à l'axe ZR qui se confond avec l'axe de visée de la caméra. La vitesse de rotation du repère de projection est très supérieure à la vitesse de déplacement du symbole. De cette manière, le symbole apparaît quasiment immobile pendant de nombreux tours du repère de projection.

La figure 5 représente schématiquement une courbe d'évolution des maxima de projection PM(X) pour les quatres barres B1, B2, B3, B4 en fonction du temps et pour la configuration de la figure 4. Des courbes analogues pour les projections sur l'axe Y peuvent être tracées de manière similaires.

Les abscisses représentent donc le temps et les ordonnées, les valeurs de X où apparaissent les pics de projection pour les différentes barres.

Au cours de la rotation du repère de projection les courbes prennent sensiblement l'allure de sinusoïdes. Mais seuls les points apparaissent autour des maxima ou des minima de ces courbes sont bien définis : ils correspondent à la formation d'un pic pour la projection considérée. Ces points sont représentés avec des dimensions proportionnelles à l'amplitude du pic considéré. En dehors, de ces points bien définis, la position sur l'axe X de pics (qui ont alors une allure en bosse) est délocalisée et ces points ne sont pas représentés.

Les pics d'amplitude maximum représentés par les points de plus grandes dimensions sont situés aux maxima et minima des pseudo-sinusoïdes.

Dans la configuration représentée sur la figure 4, les valeurs maximums des maxima de projection pour les barres B1 et B2 apparaissent simultanément.

Entre le temps TMAX1 d'apparition de ces valeurs maximums en des positions négatives sur l'axe X et le temps TMAX4 d'apparition de ces valeurs en des positions positives sur l'axe X, l'axe X a effectué un demi-tour autour de l'axe ZR.

La détermination de la position sur l'axe X et de l'amplitude (dimension du point) des pics de projection pendant un demi-tour permet la détermination de la position et de l'orientation du symbole par rapport au repère de référence.

Un exemple d'une telle détermination est donnée dans la suite, mais la mesure de ces points fournit une quantité surabondante d'informations concernant la situation du symbole.

La précision de la mesure qui nécessite une rotation d'un demi-tour du repère de référence est d'autant plus grande que la vitesse de rotation du repère de référence est grande devant la vitesse de déplacement du symbole.

Par ailleurs, l'étude des corrélations entre les points autour des maximums des pseudo-sinusoïdes permet de distinguer les points non significatifs dus aux bruits des points correspondant réellement à l'apparition d'un pic sur l'axe de projection.
- étape 40 :: on fait correspondre à ces instants des angles apparents entre les barres et les axes X et Y. Ces angles sont connus puisque le mouvement de rotation relatif entre le symbole et le repère de projection est connu.

En effet, la connaissance de la vitesse de rotation imposée, relative entre le repère de projection et le symbole permet de relier chaque temps TMAX(PM(X)) (ou TMAX(PM(Y)) d'apparition d'une valeur maximum de projection à un angle. Cet angle est l'angle apparent que fait la barre considérée avec un des axes XR ou YR du plan de référence.
- étape 42 :: grâce à la connaissance des angles apparents de chacune des barres du symbole, on déduit l'orientation du plan du symbole par rapport au repère de référence.

Pour déterminer la position du symbole, dans une première variante, on réalise les étapes suivantes :
- étape 44 :: on compare les valeurs maximales parmi les maxima de projection PM(X) et PM(Y) successifs à des valeurs de référence déterminées VR(B1), VR(B2), VR(B3), VR(B4). Ces valeurs de référence peuvent être mesurées préalablement au largage du mobile par exemple. Elles correspondent aux valeurs des maxima de projection pour une position connue du symbole.
- étape 48 :: de cette comparaison, on déduit l'éloignement du symbole par rapport au plan contenant le repère de projection (c'est-à-dire sa position projetée sur un axe perpendiculaire au repère de projection).
- étape 50 :: on déduit la position du symbole (c'est-à-dire sa position projetée sur les axes X et Y) par comparaison entre les abscisses des valeurs maximales des maxima de projection PM(X), PM(Y)sur les axes X et Y et des abscisses de référence XR1, XR2, YR1, YR2. A partir des informations de position et d'éloignement par rapport au repère de projection, on déduit la position du symbole par rapport au repère de référence.

Selon une autre variante de réalisation, l'étape 44 est remplacée par l'étape 46 suivante :
- étape 46 :: on compare les écartements X et Y entre deux valeurs maximales des maxima de projection PM(X) et PM(Y) correspondant à la détection de deux barres parallèles à des écartements de référence DR(B1, B2) et DR(B3, B4).
Ces écartements de référence sont mesurés préalablement au largage du mobile par exemple. Ils correspondent aux distances séparant les barres parallèles B1, B2, B3 et B4 pour une position connue.

Dans une autre variante de réalisation utilisant un symbole en forme de dièse, on profite du fait que le centre du symbole est situé entre deux barres parallèles. La position du centre est alors déterminée en effectuant la demi-somme des abscisses des valeurs maximales des maxima de projection selon chacun des axes X et Y.

L'orientation et la position du symbole (et donc du mobile sur lequel il est formé) sont donc déterminées par rapport au repère de référence.

La dernière étape correspond à une troisième échelle de temps. Elle nécessite une succession de déterminations de position et d'orientation du symbole. Cette étape est la suivante :
- étape 52 :: d'une succession de positions et d'orientations du symbole, déduire le mouvement (la trajectoire) du mobile. Comme on l'a vu, chaque demi-tour de rotation relative entre le repère de projection et le symbole permet la détermination complète (position, orientation) de la situation du symbole par rapport au repère de référence. La rotation relative ayant une vitesse très supérieure à celle du mouvement global du symbole, on peut effectivement considérer que la restitution du mouvement est effectuée en temps réel.

On va maintenant décrire un dispositif permettant la mise en oeuvre du procédé précédent.

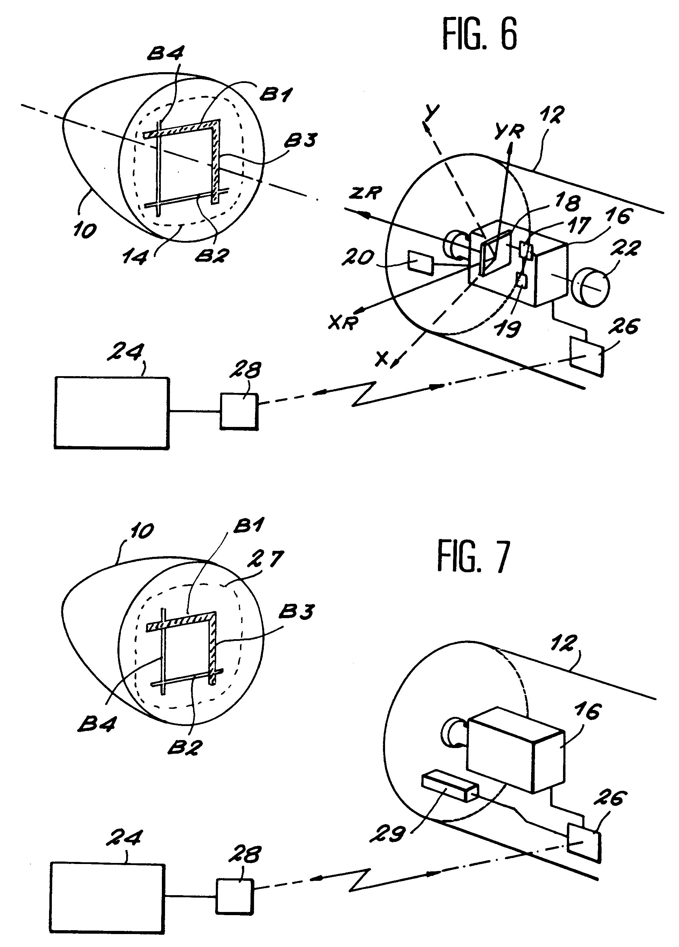

La figure 6 représente schématiquement une vue générale d'un tel dispositif appliqué au largage d'une coiffe 10 à partir du lanceur 12.

Dans cet exemple, il s'agit donc de déterminer le mouvement de la coiffe 10 relativement au lanceur 12 qui sert d'objet de référence.

Le dispositif comprend un moyen pour former un symbole plan à contour rectiligne présentant au moins deux droites parallèles sur le mobile 10 dont le mouvement est à déterminer.

Sur la figure 6, ce moyen est constitué par une mire 14 (sur laquelle est représenté le symbole) solidaire de la coiffe 10. Le symbole est formé de quatre barres B1, B2, B3 et B4. La barre B1 est parallèle à la barre B2; la barre B3 est parallèle à la barre B4. Les barres B1, B2, B3, B4 sont croisées de manière à dessiner approximativement un dièse. Les longueurs et les largeurs de ces barres ne sont pas identiques : les barres B1 et B3, perpendiculaires entre elles et similaires, sont plus larges et moins longues que les barres B2 et B4, perpendiculaires entre elles et similaires. Les différences entre les barres permettent de les distinguer lors du mouvement et de lever certaines indéterminations comme un sens de rotation par exemple.

Dans une variante de réalisation non représentée, le symbole est directement peint sur le mobile 10.

Dans une autre variante de réalisation non représentée, le symbole est constitué par une partie du mobile 10 présentant un contour adéquat.

Une caméra électronique 16 est disposée sur l'objet de référence, le lanceur 12 dans l'exemple représenté, de manière à observer le symbole au moins pendant les instants succédant au largage.

La caméra 16 comprend un détecteur 18 fournissant un signal représentatif de l'image. Ce dernier définit un plan confondu avec le plan engendré par les axes X et Y du repère de projection. Avantageusement, le plan formé par les axes XR et YR du repère de référence est confondu avec le plan contenant le repère de projection (plan du détecteur 18) et l'axe de visée de la camera 16 est confondu avec l'axe ZR du repère de référence.

Avant le largage, de manière préférée, l'axe de visée passe par le centre du dièse dessiné sur la mire 14 et seule celle-ci entre dans le champ d'observation de la caméra 16.

La caméra 16 comprend encore un moyen de nettoyage 17 pour nettoyer électroniquement l'image acquise. Ce moyen 17 fournit un signal représentatif de l'image nettoyée.

Le nettoyage électronique permet de ne conserver que la partie signifiante de l'image, à savoir le symbole et d'éliminer le fond.

La caméra 16 comprend aussi un moyen 19 pour effectuer des projections de l'image acquise et nettoyée : une projection P(X) sur l'axe X selon l'axe Y et une projection P(Y) sur l'axe Y selon l'axe X.

Eventuellement, une lampe 20 éclaire la mire 14. Cette lampe 20 peut être du type "flash" et dans ce cas, est synchronisée avec la cadence de prise de vues. La brièveté des éclairs permet d'éviter les "bougés" lors de la formation d'une image.

Avantageusement, pour favoriser sa détection, le symbole est réalisé avec un matériau rétroréfléchissant.

Au fur et à mesure que l'objet largué s'éloigne de l'objet de référence, la mire 14 reçoit de moins en moins de lumière de la part de la lampe 20. L'usage du matériau rétroréfléchissant permet de conserver une luminance du symbole sensiblement constante malgré l'éloignement. Dans ce cas, la lampe est placée à proximité de la caméra.

La caméra 16 effectue des prises de vue à cadence régulière. Les informations correspondant aux projections de chaque image acquise et nettoyée sont transmises à des moyens d'analyse et de traitement 24, par exemple un calculateur de type ordinateur ou micro-ordinateur.

Dans l'exemple représenté sur la figure 6, pour des raisons économiques et de poids, le lanceur 12 ne comporte pas le calculateur. Les informations sont transmises sous forme numérique par un émetteur/récepteur 26 qui émet des ondes de radiofréquence. Ces ondes sont captées au sol par un émetteur/récepteur 28 connecté au calculateur.

Le symbole et le repère de projection sont dotés d'un mouvement de rotation relatif connu. Ce mouvement peut provenir d'un mouvement naturel de rotation, l'objet largué tournant sur lui-même. Le mouvement de rotation peut aussi être artificiel ; un moteur 22 solidaire de la caméra 16, permet la mise en rotation de cette dernière autour de l'axe de visée ZR entraînant le repère de projection en rotation.

Dans une autre variante de réalisation, le mouvement relatif de rotation n'est dû qu'à la rotation des axes de projection X et Y. Cette rotation est réalisée électroniquement comme on le verra plus loin.

La figure 7 représente schématiquement une variante de réalisation d'un dispositif selon l'invention. Ici, un laser 29 émet un faisceau lumineux en direction du mobile 10. Le laser 29 est tel que le faisceau lumineux en se déplaçant et par des variations d'intensité adéquates dessine le symbole sur le mobile 10. Le déplacement du faisceau est suffisamment rapide pour que la caméra 16 ne perçoive, par intégration de la détection, que le symbole complet et non pas des portions de celui-ci.

Dans cette réalisation, le mouvement de rotation relatif entre le symbole et le repère de projection est obtenu en faisant tourner le dessin lumineux.

Le symbole ainsi créé par le faisceau est très lumineux. Par ailleurs, le dessin peut être actif. Le laser 29 commandé par le calculateur 24 auquel il est relié par l'intermédiaire des moyens de transmission 26 et 28 peut par exemple ajuster la dimension du symbole en fonction de l'éloignement du mobile 10 et d'une manière générale adapter le dessin aux conditions expérimentales.

De manière avantageuse, une surface catadioptrique et diffusante 27 placée sur le mobile 10 permet le renvoi de la lumière en direction de la caméra.

On comprend que dans cette variante, la lampe à éclats 20 n'est pas nécessaire : elle n'apparaît pas sur la figure 7.

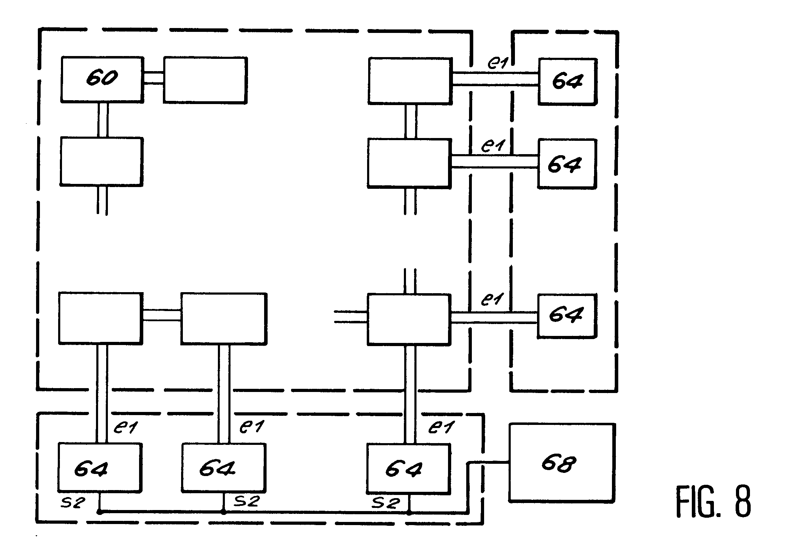

La figure 8 représente schématiquement un premier mode de réalisation du détecteur et des moyens de nettoyage et de projection.

Le détecteur 18 de la caméra est du type rétine intégrée à réseau de processeurs. Une telle rétine est décrite dans la demande de brevet français déposée le 18 Juin 1985 et publiée sous le numéro 2 583 602. Elle est constituée par un réseau de cellules 60 formées sur un même substrat et dont une description plus complète est donnée plus loin. Il suffit pour l'heure de savoir que ces cellules 60 formant les pixels du détecteur 18 comprennent un élément photosensible fournissant un signal représentatif d'un élément d'une image formée sur la rétine, un élément de conversion de ce signal en information binaire et des moyens de mémorisation de l'information binaire organisés en un réseau bidimensionnel de registres à décalage pour permettre le transfert de l'information binaire d'une cellule à une cellule voisine quelconque.

Les cellules 60 sont arrangées en lignes et en colonnes.

Comme on va le voir plus loin, de telles cellules 60 comportent le moyen de nettoyage de l'image enregistrée.

Les projections P(X) et P(Y) sont effectuées par deux séries 62, 66 de cellules d'accumulation. Celles-ci peuvent être soit numériques soit analogiques.

Dans la première série 62 pour effectuer la projection P(X), chacune des cellules d'accumulation 64 est connectée par une entrée e1 à une cellule 60 différente du détecteur 18 et appartenant à une ligne extrême.

La seconde série 66 de cellules d'accumulation 64 permet la projection P(Y) sur l'axe Y et selon l'axe X. Chacune de ces cellules d'accumulation 64 est connectée par une entrée e1, à une cellule 60 différente du détecteur 18 et appartenant à une colonne extrême.

Chaque cellule d'accumulation 64 délivre sur une sortie s2 un signal électrique proportionnel au nombre de cellules 60 ayant été excitées sur la ligne ou la colonne correspondante.

Les sorties s2 des cellules d'accumulation de la première série 62 sont reliées entre elles et à une entrée d'un circuit 68 permettant une mesure intégrale du nombre de pixels excités du détecteur 18 (on peut utiliser de manière équivalente les cellules d'accumulation de la seconde série). Cette mesure peut par exemple, servir à régler le temps d'exposition du détecteur 18 à l'intensité lumineuse présente.

Les cellules 60 possèdent des entrées de commande non représentées pour la gestion des décalages des valeurs de chaque pixel vers les cellules voisines jusqu'aux cellules d'accumulation 64.

Les cellules d'accumulation possèdent des entrées de commande non représentées pour déclencher l'accumulation de charge après l'exposition du détecteur 18.

Un tel détecteur du type rétine à réseau de processeurs muni des cellules d'accumulation pour effectuer les projections permet de faire tourner les axes de projections électroniquement. Ceci peut être obtenu par un jeu adéquat de décalages successifs des informations binaires contenues dans les cellules 60.

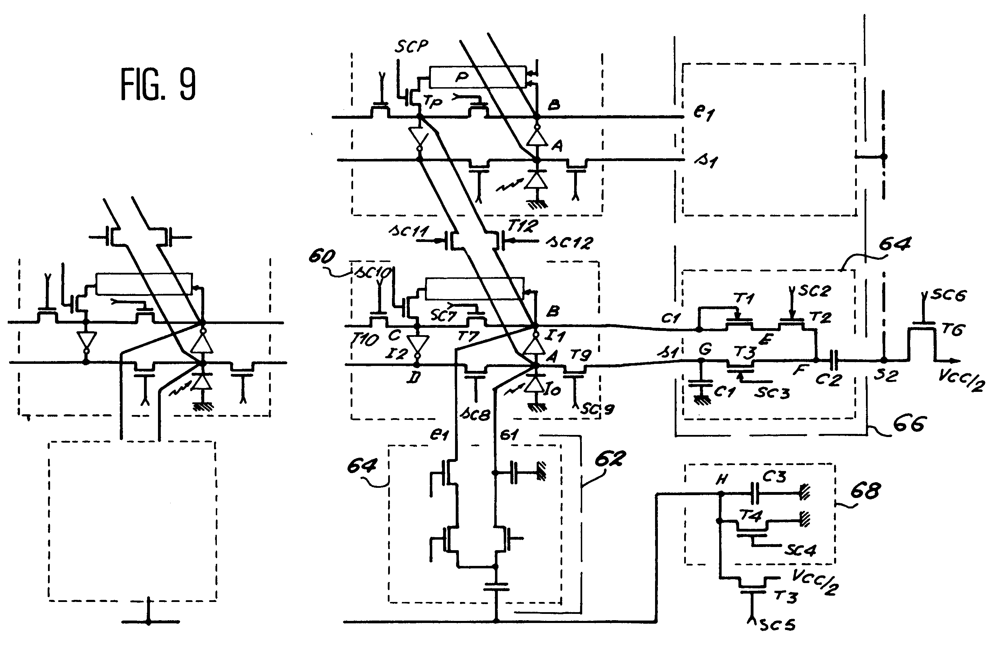

La figure 9 représente une vue partielle du mode de réalisation précédent. On peut voir le détail d'une cellule 60. Celle-ci comprend un élément photosensible 70 constitué avantageusement par une photodiode. Cet élément 70 délivre une tension au point A qui est représentative, au bout du temps d'exposition, de la valeur du pixel constitué par la cellule 60.

La tension au point A est appliquée à un circuit de conversion analogique-numérique et mémorisation comprenant un inverseur I1 branché entre le point A et le point B de connexion deux transistors T7, T8 dont les circuits de sortie sont branchés respectivement entre le point B et un point de connexion C et entre le point A et un point de connexion D et un deuxième inverseur I2 branché entre le point C et le point D.

L'inverseur I1 constitue un élément convertisseur analogique-numérique transformant la tension au point A en une information binaire prenant la valeur "0" ou la valeur "1" selon que la tension au point A est supérieure ou inférieure au seuil de fonctionnement déterminé de l'inverseur. La binarisation du pixel est donc effectuée par seuillage. L'ensemble des convertisseurs constitue donc un moyen de nettoyage par seuillage de l'image enregistrée.

Les inverseurs I1, I2 constituent avec les transistors T7, T8 un circuit de mémorisation de l'information binaire obtenue par conversion de la tension au point A.

Les circuits de mémorisation sont organisés en réseau bidimentionnel de registres à décalage : les cellules sont connectées, en lignes, par des transistors T9, T10 qui relient, respectivement, les points B et A d'une cellule aux points C et D de la cellule voisine à droite et, en colonnes, par les transistors T11, T12 qui relient respectivement les points D et C d'une cellule aux points A et B de la cellule voisine du dessous.

Le transfert d'information est commandé au moyen de signaux de commande sc7, sc8, sc9, sc10, sc11, sc12 appliqués aux transistors T7, T8, T9, T10, T11, T12. Ainsi, un décalage vers la droite est commandé en fermant T10 et T8, un décalage vers le bas en fermant T7 et T11, etc...

Chaque cellule 60 de la rétine possède en outre un processeur élémentaire P connecté en sortie à un transistor TP relié au point C et d'autre part, connecté par une entrée de donnée au point B.

L'ensemble des processeurs P constitue un autre moyen de nettoyage. En effet, il permet d'effectuer à volonté un masquage, une détection de contours ou tout autre traitement d'image.

Dans cet exemple de réalisation, les cellules d'accumulation 64 sont analogiques. Outre leur fonction d'intégration de charges, elles permettent une comparaison avec une valeur de seuil déterminée.

Les cellules 60 appartenant à une ligne et une colonne extrême du réseau sont connectées chacune à une cellule d'accumulation analogique 64.

L'entrée e1 de la cellule d'accumulation est reliée au point B de la cellule 60 lui correspondant.

Un transistor T1 est relié à l'entrée e1 et d'autre part au point de connexion E. Ce transistor T1 est câblé de manière à jouer le rôle de diode résistive.

Deux transistors T2, T3 sont connectés respectivement entre les points de connexion E, F et F, G. Ces transistors jouent le rôle d'interrupteurs commandables par l'intermédiaire de signaux de commande sc2 et sc3 qui leur sont respectivement appliqués.

Un condensateur C1 a une électrode reliée au point G tandis que sa seconde électrode est portée au potentiel de masse.

Le point G est relié à une première sortie s1 de la cellule d'accumulation 64. Cette sortie s1 est reliée au point A de la cellule 60 correspondante par l'intermédiaire du transistor T9.

Un second condensateur C2 est relié au point F d'une part et à une seconde sortie s2 de la cellule d'accumulation.

Les sorties s2 des cellules d'accumulation 64 de la première série 62 (respectivement de la deuxième série 66) sont reliées entre elles et portées à une tension Vcc/2 (où Vcc est la tension d'alimentation de la rétine, égale par exemple à 5V) par l'intermédiaire d'un transistor T5 (respectivement T6) commandé par un signal de commande sc5 (respectivement sc6).

Les transistors T1, T2 et le condensateur C2 réalisent un intégrateur.

Le transistor T3, les condensateurs C1, C2 et l'inverseur I1 de la cellule 60 correspondante réalisent un comparateur.

Dans la gamme des tensions allant de Vcc à Vcc/2, pour obtenir la recopie de la tension analogique accumulée aux bornes de C1, la commande de T3 doit être inférieure à cette tension accumulée d'une valeur de seuil déterminée. En testant successivement des valeurs de seuil régulièrement décroissantes et en recopiant le signal délivré en s1 dans la cellule 60 correspondante à chaque test, on obtient des coupes successives en amplitude du profil des projections, le signal délivré par s1 étant seuillé à chaque fois qu'il pénètre dans la cellule 60.

Pour analyser la plage de tension Vcc/2, 0V, on utilise un effet "bootstrap" sur toutes les capacités C2, obtenu par la mise en conduction des transistors T5 et T6.

Les coupes du profit des projections sont donc successivement enregistrées dans les cellules 60 de la ligne extrême et de la colonne extrême du détecteur 18. Ces informations sont délivrées en séquence sur une sortie du détecteur 18 ; elles sont sous forme numérique plus facile à traiter que les informations analogiques disponibles au niveau des cellules d'accumulation analogique.

Le circuit 68 pour la mesure intégrale du nombre de pixel ayant la valeur "1" comprend un transistor T4 relié en parallèle à un condensateur C3 entre le point de connexion G et la masse. Le transistor T4 est commandé par un signal de commande sc4.

Selon une variante de ce mode de réalisation utilisant une rétine à réseau intégré, les cellules d'accumulation analogique peuvent être remplacées par des compteurs numériques dont la capacité est égale à log₂n où n est égal au nombre de lignes et de colonnes (pour une rétine carrée) ; n est une puissance de 2. Ils peuvent être avantageusement agencés en un registre à décalage unique pour la sortie des résultats accumulés (du type "scan path" en terminologie anglosaxonne).

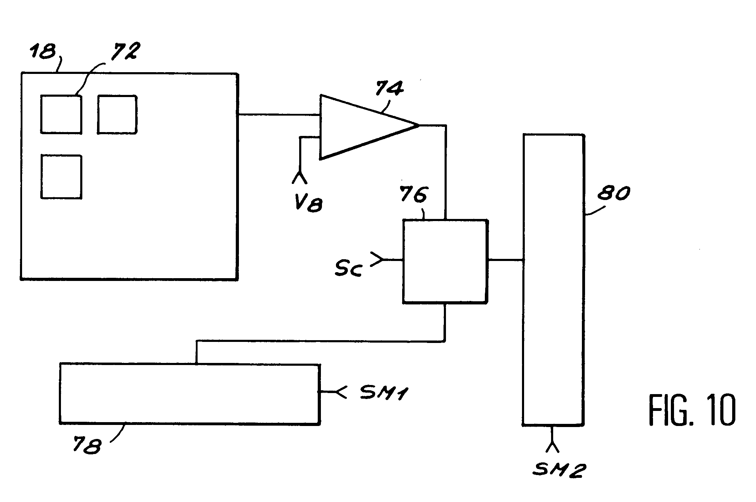

La figure 10 représente schématiquement un autre mode de réalisation d'un détecteur et de moyens de nettoyage et de projection.

Le détecteur 18 de la caméra est dans ce cas constitué par une matrice de cellules à transfert de charges 72 ("Charge Coupled Device : CCD", en terminologie anglosaxonne) arrangées en lignes et en colonnes (ou toute autre sorte de matrice de photodétecteurs).

Chaque cellule à transfert de charges 72 correspond à un pixel du détecteur et fournit sur une sortie un signal électrique analogique représentant l'illumination reçue par le pixel.

Dans l'exemple représenté, le moyen de nettoyage est un moyen de seuillage : un élément à seuil 74 délivre sur une première entrée, en séquence, les signaux électriques de chaque cellule 72 d'une ligne, ligne après ligne.

Le signal électrique analogique correspondant à la valeur des pixels est numérisé en une information binaire prenant la valeur "1" si son amplitude est supérieure à une valeur de seuil Vs ou la valeur "0" si son amplitude est inférieure à cette valeur de seuil Vs.

Un compteur 76 est connecté à la sortie de l'élément à seuil délivrant en séquence la valeur binarisée des pixels. Ce compteur 77 est commandé par un signal de commande sc qui permet de le synchroniser sur la cadence de fonctionnement de l'élément à seuil 74.

Une première et une seconde mémoires 78, 80 reliées au compteur comprennent respectivement autant de registres que le réseau de cellules à transfert de charges 72 comporte de colonnes et de lignes.

A chaque enregistrement dans le compteur 76 d'une nouvelle valeur correspondant à un pixel du détecteur 18, la mémoire 78, commandée par le signal SM1, délivre au compteur 76 le nombre mémorisé dans le registre correspondant à la colonne où se situe le pixel. Ce nombre est additionné à la valeur et le résultat est mémorisé dans ce même registre. Pour la projection sur la ligne, une opération analogue est effectuée par la mémoire 80 commandée par le signal de commande SM2.

Quand tous les pixels ont été lus, les projections P(X) et P(Y) sont contenues dans les mémoires 78 et 80. Les mémoires sont alors lues en séquence et les informations qu'elles contiennent transmises au calculateur pour traitement.

Dans un autre mode de réalisation, le détecteur 18 est du type vidicon. Les moyens de nettoyage et de projection sont réalisés de la même manière que pour le détecteur à cellules à transfert de charges.

Ainsi, conformément à l'invention, le mouvement d'un mobile se séparant d'un corps peut être reconstitué et suivi en temps réel. Le signal transportant l'information utile à cette détermination est prétraité de manière à réduire la quantité d'informations transmise aux moyens de traitement.

## Revendications

1. Procédé de restitution du mouvement d'un mobile (10) par rapport à un repère de référence (XR, YR, ZR) lié à un objet de référence (12), caractérisé en ce que, un symbole étant formé sur le mobile (10), ce symbole étant à contour rectiligne présentant au moins deux droites parallèles (B1, B2, B3, B4), il consiste à :
- périodiquement, acquérir une image dudit symbole à l'aide d'une caméra (16) solidaire de l'objet de référence (12),
- à chaque acquisition :
- projeter l'image acquise sur au moins deux axes X et Y formant un repère de projection de position et d'orientation connues par rapport au repère de référence (XR, YR, ZR),
- déterminer les maxima de chacune des projections,
- au moins entre chaque acquisition, maintenir un mouvement connu de rotation relatif entre le symbole et le repère de projection,
- d'une succession de maxima de projections, déduire l'orientation et la position du symbole par rapport au repère de référence (XR, YR, ZR),
- d'une succession d'orientations et de positions du symbole, restituer le mouvement du mobile (10) par rapport au repère de référence (XR, YR, ZR).

2. Procédé selon la revendication 1, caractérisé en ce qu'avant de projeter l'image acquise, on fait subir à cette dernière un traitement de nettoyage.

3. Procédé selon la revendication 1, caractérisé en ce que, pour la détermination de l'orientation du symbole par rapport au repère de référence (XR, YR, ZR), il consiste à :
- par comparaison entre les valeurs des maxima successifs des projections, déterminer les instants où ces valeurs sont maximales,
- faire correspondre à ces instants des angles apparents entre les droites appartenant au contour du symbole et les axes (X, Y) du repère de projection,
- en déduire l'orientation du symbole par rapport au repère de référence (XR, YR, ZR).

4. Procédé selon la revendication 1, caractérisé en ce que, pour la détermination de la position du symbole par rapport au repère, il consiste à :
- comparer l'écartement entre les abscisses des valeurs maximales des maxima de projection selon l'un des axes X ou Y correspondant aux deux droites parallèles constitutives du contour à un écartement de référence déterminé,
- en déduire l'éloignement du symbole par rapport au repère de projection,
- déduire la position du symbole par rapport au repère de référence à partir des abscisses des valeurs maximales des maxima de projection sur les axes X et Y et de l'éloignement du symbole par rapport au repère de projection.

5. Procédé selon la revendication 1, caractérisé en ce que, pour la détermination de la position du symbole par rapport au repère de référence, il consiste à :
- comparer les valeurs maximales des maxima d'une même projection à des valeurs de référence déterminées,
- en déduire l'éloignement du symbole par rapport au repère de référence (XR, YR, ZR),
- déduire la position du symbole par rapport au repère de référence à partir des abscisses des valeurs maximales des maxima de projection sur les axes X et Y.

6. Dispositif pour la mise en oeuvre du procédé selon la revendication 1, caractérisé en ce qu'il comprend :
- un moyen (14, 29) pour former un symbole plan à contour rectiligne présentant au moins deux droites parallèles sur le mobile (10) dont le mouvement est à restituer par rapport à un repère de référence lié à un objet de référence,
- une caméra électronique (16) disposée sur un objet de référence (12), cette caméra comportant au moins :
- un détecteur (18) fournissant un signal représentatif d'une image acquise dudit symbole,
- un moyen (19) pour effectuer une projection P(X) sur l'axe X selon l'axe Y et une projection P(Y) sur l'axe Y selon l'axe X de l'image, ce moyen (19) fournissant un signal représentatif des projections P(X) et P(Y),
- un moyen pour mettre en rotation relative le symbole et le repère de projection,
- des moyens de traitement (24) reliés à la caméra électronique et aptes à déduire à partir du signal représentatif des maxima des projections P(X) et P(Y) l'orientation et la position du mobile à chaque instant.

7. Dispositif selon la revendication 6, caractérisé en ce que la caméra (16) comporte en outre un moyen de nettoyage (17) de l'image acquise, ce moyen (17) étant connecté au détecteur et fournissant un signal représentatif de l'image nettoyée.

8. Dispositif selon la revendication 6, caractérisé en ce que le moyen pour former le symbole sur le mobile (10) est constitué par un laser (29) disposé sur l'objet de référence (12) et délivrant un faisceau lumineux dessinant le symbole sur le mobile (10).

9. Dispositif selon la revendication 6, caractérisé en ce que le symbole est formé de quatre bandes (B1, B2, B3, B4), parallèles deux à deux et croisées de manière à représenter sensiblement un dièse.

10. Dispositif selon la revendication 9, caractérisé en ce que les bandes (B1, B2, B3, B4) présentent des dimensions permettant de les individualiser.

11. Dispositif selon la revendication 6, caractérisé en ce qu'il comprend un moyen (22) pour doter le symbole et la caméra (16) d'un mouvement relatif de rotation.

12. Dispositif selon la revendication 6, caractérisé en ce qu'il comprend en outre une lampe à éclats (20) synchronisée sur les prises de vues de la caméra et disposée sur l'objet de référence (12).

13. Dispositif selon la revendication 6, caractérisé en ce qu'il comporte un système de mesure intégrale (68) délivrant sur une sortie un signal proportionnel au nombre de pixels excités du détecteur (18).

14. Dispositif selon la revendication 6, caractérisé en ce que le détecteur (18) est constitué par une rétine intégrée à réseau de processeurs comprenant des cellules photosensibles (60) arrangées en matrice.

15. Dispositif selon la revendication 14, caractérisé en ce que le moyen de nettoyage (17) est réalisé par la rétine intégrée à réseau de processeurs.

16. Dispositif selon la revendication 13, caractérisé en ce que le moyen pour effectuer des projections (19) est réalisé par une première série (62) de cellules d'accumulation (64) connectées respectivement aux cellules photosensibles (60) d'une ligne extrême de la matrice et par une seconde série (66) de cellules d'accumulation (64) connectées respectivement aux cellules photosensibles (60) d'une colonne extrême de la matrice, chaque cellule d'accumulation (64) délivrant sur une sortie (s1) un signal correspondant au nombre de cellules photosensibles excitées sur la ligne ou la colonne à laquelle elle est connectée.

## Patentansprüche

1. Verfahren zur Lagebestimmung eines bewegten Körpers (10) in Bezug auf ein Bezugssystem (XR, YR, ZR), das mit einem Bezugsobjekt (12) verbunden ist, **dadurch** **gekennzeichnet**, **daß** ein Symbol auf den beweglichen Körper (10) gebildet ist, wobei dieses Symbol rechtlinige Konturen aufweist, die mindestens zwei parallele Geraden (B1, B2, B3, B4) darstellen, welches umfaßt:
- periodisch das Aufnehmen eines Bildes des Symboles mit Hilfe einer Kamera (16), welche an dem Bezugsobjekt (12) vorgesehen ist,
- bei jeder Aufnahme:
- Projizieren des erhaltenen Bildes auf mindestens zwei Achsen X und Y, welche ein Projektionssystem für die Position und der Orientierung bilden, die in Bezug auf das Bezugssystem (XR, YR, ZR) bekannt sind,
- Bestimmen der Maxima jeder Projektion;
- mindestens zwischen jeder Aufnahme ein Beibehalten einer bekannten relativen Drehbewegung zwischen dem Symbol und dem Projektionssystem;
- Bestimmen aus der Folge vom Maxima der Projektionen, die Orientierung und die Position des Symbols in Bezug auf das Bezugssystem (XR, YR, ZR),
- Bestimmen aus der Folge von Orientierungen und Positionen des Symbols, die Bewegung des beweglichen Körpers (10) in Bezug auf das Bezugssystem (XR, YR, ZR).

2. Verfahren nach Anspruch 1, **dadurch gekennzeichnet, daß** vor der Projektion der aufgenommenen Bilder eine Reinigungsbehandlung der letzteren vorgenommen wird.

3. Verfahren nach Anspruch 1, **dadurch gekennzeichnet, daß** es für die Bestimmungen der Orientierung des Symbols in Bezug auf das Bezugssystem (XR, YR, ZR) umfaßt:
- durch Vergleich zwischen den Werten der aufeinanderfolgenden Maxima der Projektionen Bestimmen der Momente, wo diese Werte maximal sind;
- bei diesen Momenten in-Bezug-Setzen der scheinbaren Winkel zwischen den Geraden, die zu der Kontur des Symbols gehören, und den Achsen (X, Y) des Projektionssystems;
- Ableiten der Orientierung des Symbols in Bezug auf das Bezugssystem (XR, YR, ZR).

4. Vorrichtungen nach Anspruch 1, **dadurch gekennzeichnet,** **daß** es für die Bestimmung der Position des Symbols in Bezug auf das Bezugssystem umfaßt:
- Vergleichen des Abstandes zwischen den Abszissen der Maximalwerte der Maxima der Projektion gemäß einem der Achsen X oder Y entsprechend den beiden parallelen Geraden, welche die Kontur bilden, mit einem bestimmten Bezugsabstand,
- daraus Ableiten der Entfernung des Symbols in Bezug auf das Bezugssystem,
- Ableiten der Position des Symbols in Bezug auf das Bezugssystem auf der Grundlage der Abszissen der maximalen Werte der Maxima der Projektionen auf den Achsen X und Y und der Entfernung des Symbols in Bezug auf das Projektionssystem.

5. Verfahren nach Anspruch 1, **dadurch gekennzeichnet, daß** es für die Bestimmung der Position des Symbols in Bezug auf das Bezugssystem umfaßt:
- Vergleichen der Maximalwerte der Maxima einer gleichen Projektion mit den bestimmten Bezugswerten,
- Ableiten der Entfernung des Symbols in Bezug auf das Bezugssystem (XR, YR, ZR),
- Ableiten der Position des Symbols in Bezug auf das Bezugssystem auf der Grundlage der Abszissen der maximalen Werte der Maxima der Projektion auf die Achsen X und Y.

6. Vorrichtung zur Durchführung des Verfahrens nach Anspruch 1, **dadurch gekennzeichnet, daß** sie umfaßt:
- eine Einrichtung (14, 29) zur Bildung eines ebenen Symbols mit rechtlinigen Konturen, die mindestens zwei parallele Geraden auf einem beweglichen Körper (10) bilden, dessen Bewegung bestimmt werden soll mit Bezug auf ein Bezugssystem, das mit einem Bezugsobjekt verbunden ist;
- eine elektronische Kamera (16), welche auf dem Bezugsobjekt (12) vorgesehen ist, wobei diese Kamera umfaßt:
- einen Detektor (18), welcher ein Signal entsprechend einem erhaltenen Bild von dem Symbol liefert;
- eine Einrichtung (19) zum Ausführen der Projektionen P(X) auf die Achse X gemäß der Achse Y und einer Projektion P(Y) auf die Achse Y gemäß der Achse X des Bildes, wobei die Einrichtung (19) ein Signal entsprechend den Projektionen P(X) und P(Y) liefert;
- eine Einrichtung zum Versetzen des Symboles und des Projektionssystems in eine relative Drehung;
- eine Verarbeitungseinrichtung (24), welche mit der elektronischen Kamera verbunden und geeignet ist, auf der Grundlage des Signals, welches die Maxima der Projektionen P(X) und P(Y) wiedergibt, die Orientierung und die Position des beweglichen Körpers in jedem Augenblick zu bestimmen.

7. Vorrichtung nach Anspruch 6, **dadurch gekennzeichnet, daß** die Kamera (16) außerdem eine Einrichtung (17) zur Reinigung der erhaltenen Bilder umfaßt, wobei diese Einrichtung (17) mit dem Detektor verbunden ist und ein Signal entsprechend dem gereinigten Bild liefert.

8. Vorrichtung nach Anspruch 6, **dadurch gekennzeichnet, daß** die Einrichtung zum Bilden des Symbols auf dem beweglichen Körper (10) einen Laser (29) umfaßt, welcher auf dem Bezugsobjekt (12) vorgesehen ist, und einen Leuchtstrahl liefert, welcher das Symbol auf dem beweglichen Körper (10) zeichnet.

9. Vorrichtung nach Anpruch 6, **dadurch gekennzeichnet, daß** das Symbol aus vier Bändern (B1, B2, B3, B4) besteht, welche paarweise zueinander parallel sind und in der Weise gekreuzt sind, daß sie ein Kreuz bilden.

10. Vorrichtung nach Anspruch 9, **dadurch gekennzeichnet, daß** die Bänder (B1, B2, B3, B4) Abmessungen aufweisen, welche ihre Unterscheidung erlaubt.

11. Vorrichtung nach Anspruch 6, **dadurch gekennzeichnet, daß** eine Einrichtung (22) zum Ausstatten einer relativen Drehbewegung für das Symbol und die Kamera (16) vorgesehen ist.

12. Vorrichtung nach Anspruch 6, **dadurch gekennzeichnet, daß** sie außerdem eine Blitzlampe (20), welche mit der Bildaufnahme der Kamera synchronisiert und auf dem Bezugsobjekt (12) vorgesehen ist.

13. Vorrichtung nach Anspruch 6, **dadurch gekennzeichnet, daß** sie ein integriertes Meßsystem (68) umfaßt, welche auf einem Ausgang ein Signal liefert, welches proportional zur Anzahl der erregten Pixtel des Detektors (18) ist.

14. Vorrichtung nach Anspruch 6, **dadurch gekennzeichnet, daß** der Detektor (18) ein Bildaufnahmefeld umfaßt, welches mit einem Netz von Prozessoren integriert ist, die photoempfindliche Zellen (60) umfassen, welche in Matrixform angeordnet sind.

15. Vorrichtung nach Anspruch 14, **dadurch gekennzeichnet, daß** die Reinigungseinrichtung (17) durch das Bildaufnahmefeld, welches mit den Prozessoren integriert ist, verwirklicht wird.

16. Vorrichtung nach Anspruch 13, **dadurch gekennzeichnet, daß** die Einrichtung zum Ausführen der Projektionen (19) durch eine erste Reihe (62) von Akkumulatorzellen (64) verwirklicht wird, die jeweils mit den photoempfindlichen Zellen (60) einer äußeren Linie der Matrix verbunden sind und durch eine zweite Reihe (66) von Akkumulatorzellen (64), welche jeweils mit den photoempfindlichen Zellen (60) einer äußeren Spalte der Matrix verbunden sind, wobei jede Akkumulatorzelle (64) an einem Ausgang (s1) ein Signal liefert, welches der Anzahl der photoempfindlichen Zellen entspricht, die auf der Zeile oder Spalte angeregt wurden, mit welcher diese verbunden ist.

## Claims

1. Process for the restoration of the movement of a moving object (10) relative to a reference mark (XR, YR, ZR) linked with a reference object (12), characterized in that a symbol is formed on the moving object (10) having a rectilinear contour with at least two parallel straight lines (B1, B2, B3, B4) and comprising periodically acquiring an image of said symbol with the aid of a camera (16) integral with the reference object (12) and for each acquisition projecting the image acquired onto at least two axes X and Y forming a projection reference of known position and orientation with respect to the reference mark (XR, YR, ZR) and determining the maxima of each of these projections, maintaining a known relative rotation movement between the symbol and the projection mark at least between each acquisition, deducing from a succession of maxia of projections the orientation and position of the symbol relative to the reference mark (XR, YR, ZR) and restoring the movement of the moving object (10) relative to the reference mark (XR, YR, ZR) from a succession of orientations and positions of the symbol.

2. Process according to claim 1, characterized in that before projecting the image acquired, the latter undergoes a cleaning treatment.

3. Process according to claim 1, characterized in that, for the determination of the orientation of the symbol with respect to the reference mark (XR, YR, ZR), it comprises determining the instants where these values are at a maximum by comparison between the values of the successive maxima of the projections, bringing about correspondence at these instants-of the apparent angles between the straight lines belonging to the contour of the symbol and the axes (X, Y) of the projection mark and deducing therefrom the orientation of the symbol with respect to the reference mark (XR, YR, ZR).

4. Process according to claim 1, characterized in that, for the determination of the position of the symbol with respect to the mark, it comprises comparing the distance between the abscissas of the maximum values of the projection maxima along one of the axes X or Y corresponding to two parallel straight lines constituting the contour with a predetermined reference distance, deducing therefrom the distance between the symbol and the projection mark and deducing the position of the symbol from the reference mark on the basis of abscissas of the maximum values of the projection maxima on the axes X and Y and the distance of the symbol from the projection mark.

5. Process according to claim 1, characterized in that, for the determination of the position of the symbol relative to the reference mark, it comprises comparing the maximum values of the maxima of a same projection with predetermined reference values, deducing therefrom the distance between the symbol and the reference mark (XR, YR, ZR) and deducing the position of the symbol from the reference mark on the basis of the abscissas of the maximum values of the projection maxima on the axes X and Y.

6. Apparatus for performing the process according to claim 1, characterized in that it comprises a means (14, 29) for forming a planar symbol with a rectilinear contour having at least two parallel straight lines on the moving object (10), whose movement is to be restored relative to a reference mark linked with a reference object, an electronic camera (16) located on a reference object (12), said camera having at least one detector (18) supplying a signal representative of a recorded image of said symbol, a means (19) for performing a projection P(X) on the axis X along the axis Y and a projection P(Y) on the axis Y along the axis X of the image, said means supplying a signal representative of the projections P(X) and P(Y), a means (19) for bringing about a relative rotation between the symbol and the projection mark and processing means (24) connected to the electronic camera and able to deduce the orientation and position of the moving object at all times from the signal representative of the maxima of the projections P(X) and P(Y).

7. Apparatus according to claim 6, characterized in that the camera (16) also has a means (17) for cleaning the acquired image and which is connected to the detector and supplies a signal representing the cleaned image.

8. Apparatus according to claim 6, characterized in that the means for forming the symbol on the moving object (10) is constituted by a laser (29) located on the reference object (12) and supplying a light beam projecting the symbol onto the moving object (10).

9. Apparatus according to claim 6, characterized in that the symbol is formed by four bars (B1, B2, B3, B4), which are parallel in pairs and intersect so as to essentially form a sharp.

10. Apparatus according to claim 9, characterized in that the bars (B1, B2, B3, B4) have dimensions permitting the individualization thereof.

11. Apparatus according to claim 6, characterized in that it comprises a means (22) for giving a relative rotary movement to the symbol and the camera (16).

12. Apparatus according to claim 6, characterized in that it also comprises a flash lamp (20) synchronized with the shots taken by the camera and located on the reference object (12).

13. Apparatus according to claim 6, characterized in that it incor- porates an integral measuring system (68) supplying on an output a signal proportional to the number of excited pixels of the detector (18).

14. Apparatus according to claim 6, characterized in that the detector (18) is constituted by an integrated retina with a processor array having photosensitive cells (60) arranged in matrix form.

15. Apparatus according to claim 14, characterized in that the cleaning means (17) is in the form of the integrated retina with the processor array.

16. Apparatus according to claim 13, characterized in that the means for carrying out the projections (19) is constituted by a first series (62) of accumulation cells (64) respectively connected to the photosensitive cells (60) of an end row of the matrix and by a second series (66) of accumulation cells (64) respectively connected to the photosensitive cells (60) of an end column of the matrix, each accumulation cell (64) supplying on an output (s1) a signal corresponding to the number of excited photosensitive cells on the row or column to which it is connected.
